# EUROPÄISCHE PATENTSCHRIFT

(11) **EP 1 084 952 B1**
(45) Veröffentlichungstag und Bekanntmachung des Hinweises auf die Patenterteilung: **22.10.2003**
(21) Anmeldenummer: 00118244.3
(22) Anmeldetag: 04.09.2000
(51) Int. Cl.: B64D 37/00, B60K 15/035, B64D 37/32

(54) **Entlüftungsventil mit Be- und Entlüftungskanal für ein Tankgefäss eines Hubschraubers**
Vent valve with venting channel for helicopter fuel tanks
Soupape d'évacuation de vapeurs avec conduit d'aération pour réservoir de carburant d'un hélicoptère

(30) Priorität: 15.09.1999 DE 19944124
(43) Veröffentlichungstag der Anmeldung: 21.03.2001
(73) Patentinhaber: Eurocopter Deutschland GmbH, 86609 Donauwörth (DE)
(72) Erfinder: Schlegel, Werner, 85570 Markt Schwaben (DE); Wojatschek, Klaus, 82054 Arget (DE)
(74) Vertreter: Baum, Wolfgang, Dipl.-Ing.

(56) Entgegenhaltungen:
- US-A- 3 432 121
- US-A- 4 064 889
- US-A- 4 756 328

## Beschreibung

Die Erfindung betrifft ein Entlüftungsventil mit Be- und Entlüftungskanal für ein Tankgefäß eines Hubschraubers. Das Entlüftungsventil beinhaltet eine Einrichtung zur Abdichtung des Be- und Entlüftungskanals gegenüber dem Tankgefäß beim Lösen eines Verbindungsmittels (in Folge eines Crash) zwischen der Rumpfzelle (insbesondere dem Fußboden) und dem Tankgefäß, wobei die Einrichtung in einem Ventilgehäuse des Entlüftungsventils angeordnet ist und ein bewegbares Dichtmittel besitzt.

Die DE 31 16 719 A1 beschreibt eine Vorrichtung zum Entlüften eines Kraftstoffbehälters von Kraftfahrzeugen. Die bekannte technische Lösung soll ein Auslaufen von Kraftstoff insbesondere bei Dachlage des Kraftfahrzeuges durch eine Kugel in der Vorrichtung zum Entlüften eines Kraftstoffbehälters verhindern. Die bekannte Lösung schlägt vor, dass bei Kopflage des Kraftstoffbehälters die einzige Öffnung eines Käfigs durch die Kugel ,verschlossen wird. Die bekannte technische Lösung ist nicht geeignet bei einer vollständigen Betankung eines Hubschraubers eine dauerhaft sichere Funktion des Beund Entlüftungskanals zu gewährleisten.

Im Stand der Technik vielfach bekannte Hubschrauber besitzen eine Tankanlage, die u.a. zwei Tankgefäße umfaßt. Beide Tankgefäße, auch als Haupttank und Entnahmetank bezeichnet, sind zwischen einer Unterbodenstruktur angeordnet, wobei die Unterbodenstruktur zwischen Fußboden und unterer Verschalung des Rumpfes befestigt ist. Haupttank und Entnahmetank liegen in einer Ebene und sind bezüglich der Längsachse des Hubschraubers hintereinanderliegend in der Unterbodenstruktur angeordnet. Haupttank und Entnahmetank sind über einen Verbindungskanal mit einer Pumpe miteinander verbunden. Weiterhin sind beide durch einen Überlauf miteinander verbunden. Der Haupttank besitzt das deutlich größere Fassungsvermögen. Dahinterliegend, in Richtung Heck, ist der Entnahmetank angeordnet. Vom Entnahmetank führt eine Versorgungsleitung zum Triebwerk. Haupttank und Entnahmetank besitzen jeweils ein selbstdichtendes Entlüftungsventil, welches mit einem Kanal zur Be- und Entlüftung verbunden ist. Der Kanal zur Be- und Entlüftung ist unmittelbar oberhalb der Oberkante der Tankgefäße geführt. Das hat zur Folge, daß bei voller Betankung und geringfügiger Neigung der Tankgefäße die Be- und Entlüftungsleitungen vollaufen können. Ein solches Entlüftungsventil ist in dem Dokument DE 198 44 264 C1 beschrieben. Das Entlüftungsventil besitzt eine Einrichtung zur Abdichtung des Be- und Entlüftungskanals gegenüber dem Tankgefäß beim Lösen eines Verbindungsmittels (infolge Crash) zwischen der Rumpfzelle (Fußboden) und dem Tankgefäß. Der Stand der Technik hat den Nachteil, daß Tankgefäße des Hubschraubers mit bekanntem Entlüftungsventil nicht vollständig mit Treibstoff gefüllt werden können, so daß das tatsächliche Fassungsvermögen der Tankgefäße - obwohl vorhanden - nicht genutzt werden konnte.

Aufgrund der Neigung des Landegestells eines stehenden Hubschraubers gegenüber seiner Standfläche sind Haupt- und Entnahmetank ebenfalls geneigt. Der Haupttank liegt etwas höher als der Entnahmetank.

Bei einem vollständigen Betanken im Stand wäre aufgrund der Neigung des Hubschraubers Treibstoff bereits in den Be- und Entlüftungskanal (kurz Kanal genannt) gelaufen und hätte den Be- und Entlüftungskanal blockiert. Die Mitte einer Entlüftungsleitung liegt nur wenige Millimeter (ca. 12mm) über der Oberkante des Tankgefäßes bzw. ca. 28mm über dem Niveau der Entlüftungsbohrungen. Diese Anordnung führt dazu, daß bei geringen Neigungen eines vollständig gefüllten Tankgefäßes die Entlüftungskanäle mit Treibstoff vollaufen.

Mit vollständig gefülltem Tankgefäß kann dieses Problem auch im Horizontalflug auftreten, wenn aufgrund dieser Fluglage der Entnahmetank etwas höher liegt als der Haupttank. Ein weiteres, nachfolgend erläutertes Problem ist bekannt. Bei längerem Stand eines betankten Hubschraubers in warmer Atmosphäre oder bei schnellen Temperaturwechseln ist es nicht zu vermeiden, daß sich flüssiger Treibstoff im Be- und Entlüftungskanal infolge Kondensation von Treibstoffdämpfen ablagert.

Bei ausreichender Flüssigkeitsmenge im Kanal kann auch in diesem Fall die Funktion des Be- und Entlüftungskanals gestört werden.

Document US 4 064 889 zeigt ein Entlüftungssystem mit einem Entlüftungsventil und einem Be- und Entlüftungskanal, mit einer Einrichtung zur Abdichtung des Be- und Entlüftungskanals, wobei in Falle eines Unfalls eine Sollbruchstelle bricht und der Be- und Entlüftungskanal abgedichtet wird. Die Einrichtung zur Abdichtung ist in einem Ventilgehäuse des Entlüftungsventils angeordnet und besitzt eine Ventilkugel als Dichtmittel.

Aufgabe der Erfindung ist es, eine im wesentlichen vollständige Betankung der Tankgefäße eines Hubschraubers zu ermöglichen und eine dauerhaft sichere Funktion des Be- und Entlüftungskanals zu ermöglichen.

Die Aufgabe wird durch die kennzeichnenden Merkmale des Anspruch 1 gelöst. Es wird damit eine vollständige Betankung beider Tankgefäße ermöglicht, ohne die Be- und Entlüftung der Tankanlage zu gefährden. Das erfindungsgemäße Entlüftungsventil ist im Entnahmetank angeordnet, während der Haupttank weiterhin mit dem bekannten Entlüftungsventil ausgerüstet ist. Die Erfindung gewährleistet auch, daß kondensierter Treibstoff zu keiner Gefährdung der Be- und Entlüftung der Tankanlage führt. Auch im Flugbetrieb, insbesondere beim Horizontalflug, ist gewährleistet, daß mindestens eine der beiden Entlüftungskanäle für eine Be- und Entlüftung der Tankanlage zur Verfügung steht.

Entsprechend einer weiteren Ausgestaltung besitzt eine Ventilkugel im Entlüftungsventil einen Hubweg, der von der selbstdichtenden Einrichtung bis an die Öffnung des Be- und Entlüftungskanals reicht.

Der Durchmesser der Ventilkugel ist größer als der der abzudichtenden Öffnung des Beund Entlüftungskanals.

Nachfolgend wird die Erfindung anhand eines Ausführungsbeispiels mit Zeichnungen erläutert. Es zeigen
- **Fig. 1**: Kammern zur Aufnahme der Tankgefäße in der Unterbodenstruktur eines Hubschraubers
- **Fig. 2**: Neigung der Tankgefäße gegenüber einer Standfläche
- **Fig. 3**: erfindungsgemäßes Entlüftungsventil
- **Fig. 4**: Verbindungskanal

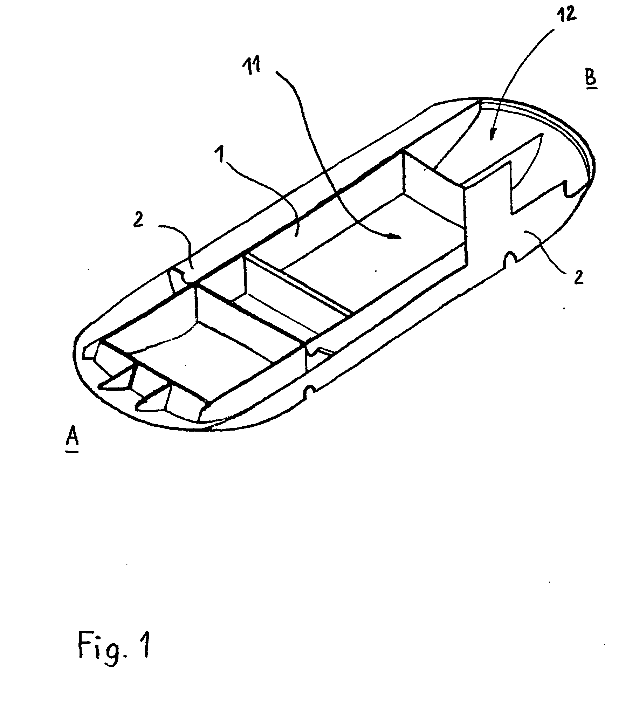

**Figur 1** zeigt die Unterbodenstruktur 1 auf der unteren Verschalung 2 des Rumpfes eines Hubschraubers. Die Unterbodenstruktur 1 besitzt entlang ihrer Länge vom Heck B zum Bug A mehrere Kammern, wobei der Haupttank in der Kammer 11 und der Entnahmetank in der Kammer 12 angeordnet sind. Die Kammer 12 befindet sich am Heck B des Hubschraubers.

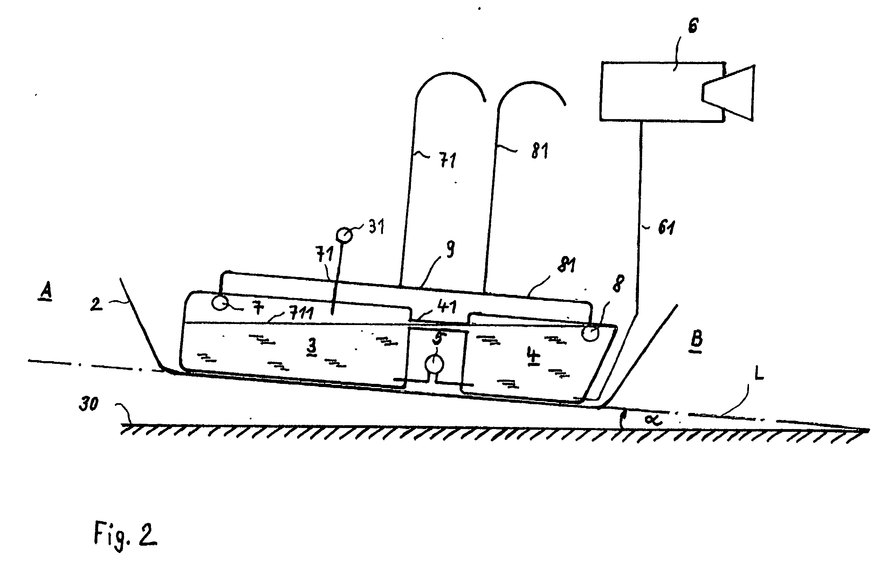

**Figur 2** zeigt schematisiert die Neigung der Längsachse L eines stehenden Hubschraubers auf einer Standfläche 30. Die äußere, untere Kontur des Hubschraubers wird durch die untere Verschalung 2 repräsentiert. Auf der Verschalung 2 liegend, sind Haupttank 3 und Entnahmetank 4 dargestellt. Beide befinden sich zwischen der Unterbodenstruktur 1 (in Fig. 2 nicht dargestellt). Der Einfüllstutzen 31 für die Tanks befindet sich im Haupttank. Eine Kraftstoffpumpe 5 mit Verbindungsleitungen verbindet den Haupttank 3 mit dem Entnahmetank 4. Dadurch wird gewährleistet, daß der Entnahmetank 4 stets gefüllt bleibt und während des Fluges zuerst der Haupttank 3 entleert wird. Weiterhin sind Haupttank 3 und Entnahmetank 4 in ihrem oberen Bereich mittels einer Überlaufleitung 41 verbunden. Sie ermöglicht einen Kraftstoffausgleich zwischen den Tanks aufgrund fluglagenbedingter Änderungen des Treibstoffpegel. Vom Entnahmetank 4 führt eine Treibstoffleitung 61 zum Triebwerk 6. Sind zwei Triebwerke angeordnet, so werden beide über je eine Treibstoffleitung aus dem Entnahmetank 4 versorgt.

Haupttank 3 und Entnahmetank 4 besitzen ein selbstdichtendes Entlüftungsventil 7 bzw. 8 wie im Stand der Technik beschrieben mit einem daran angeschlossenen Be- und Entlüftungskanal 71 bzw. 81. Beide Be- und Entlüftungskanäle 71, 81 münden außenbords. Die Entlüftungsventile 7,8 dienen grundsätzlich der Be- und Entlüftung des Tankgefäßes. Eine Selbstdichtung der Entlüftungsventile 7, erfolgt nur im Crashfall. Nur der Entnahmetank 4 besitzt das weiterentwickelte, erfindungsgemäße Entlüftungsventil 8. Damit wird deutlich, daß zwischen den beiden Tankgefäßen nur der Entnahmetank 4 mit dem erfindungsgemäßen Entlüftungsventil 8 ausgerüstet wird. Somit wird eine vollständige Betankung beider Tankgefäße ermöglicht, ohne die Be- und Entlüftung zu behindern.

Das Entlüftungsventil 8 besitzt eine Einrichtung 15 zur Abdichtung des Be- und Entlüftungskanals 81. Diese Einrichtung 15 hat ein Dichtmittel, welches die Abdichtung in zwei unterschiedlichen Funktionen ermöglicht.

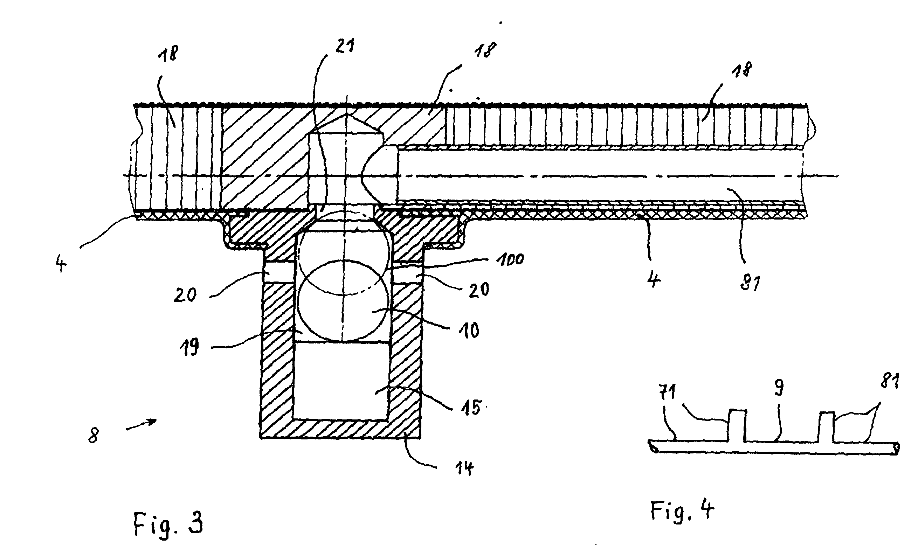

**Figur 3** zeigt ein solches erfindungsgemäßes Entlüftungsventil 8, welches die beiden Funktionen in sich vereinigt.

Die selbstdichtende Einrichtung 15 dient dem Verschluß des Be- und Entlüftungskanals 81, wenn sich das Tankgefäß 4 von der Haltestruktur 18 im Crash-Fall lösen sollte. Die Einrichtung 15 kann beispielsweise mit einem Kolben (entsprechend DE 198 44 264 C1) ausgerüstet sein, der mit einer Feder vorgespannt ist. Die Einrichtung 15 (nur schematisch dargestellt) ist im Ventilgehäuse 14 gelagert. Dieser Kolben wird durch eine Feder erst im Crash-Fall im Zylinderraum 19 aufwärts (Richtung Öffnung 21 des Be- und Entlüftungskanals 81) bewegt. Dieser Zylinderraum 19 hat mindestens eine Öffnung 20 in den Innenraum des Tankgefäßes 17.

Zweckmäßigerweise ist weiterhin im Zylinderraum 19 eine Ventilkugel 10 angeordnet, die 2 Funktionen erfüllen kann.

Im Crash-Fall schiebt die Einrichtung 15 mittels entspannender Feder und Kolben die Ventilkugel 10 gegen die Öffnung 21 des Be- und Entlüftungskanals 81. Damit ist der Beund Entlüftungskanal 81 im Crash-Fall dauerhaft verschließbar. Der Kolben dient dem Transport der Ventilkugel 10, die die Dichtfunktion übernimmt.

Im anderen Fall bleibt die Ventilkugel 10 im Zylinderraum 19 frei beweglich. In Abhängigkeit des Treibstoffpegels gelangt Treibstoff durch die Öffnung 20 in den Zylinderraum 19, so daß durch den Auftrieb die Ventilkugel 10 aus einem Öffnungszustand in einen Schließzustand 100 versetzbar und zurück versetzbar ist. Damit wird auf konstruktiv einfache Weise erreicht, daß beim vollständigen Betanken kein flüssiger Treibstoff direkt in den Be- und Entlüftungskanal 81 gelangen kann. Der Be- und Entlüftungskanal 81 ist aus Platzgründen oberhalb der Oberkante des Tankgefäßes geführt und damit in der Haltestruktur 18 (entspricht dem Fußboden der Rumpfzelle) integriert.

Beim vollständigen Betanken der Tankgefäße ist der Treibstoffpegel 711 **(Fig. 2)** bis knapp unterhalb des Entlüftungsventils 7 geführt. Da die Be- und Entlüftungskanäle 71, 81 im wesentlichen knapp oberhalb der Oberkante der Tankgefäße 3, 4 geführt werden, verhindert das Entlüftungsventil 8, mit der Ventilkugel 10 ausgerüstet, daß Treibstoff in Folge vollständiger Betankung in die Be- und Entlüftungskanäle aufsteigt.

Es wird damit verhindert, daß der Treibstoff vom Be- und Entlüftungskanal 81 über Verbindungskanal 9 auch in Be- und Entlüftungskanal 71 gelangen könnte. Es wird vermieden, daß Be- und Entlüftungskanal 81 und 71 vom wachsenden Treibstoffpegel gesperrt werden könnten. Damit könnte die noch vorhandene Luftblase im Haupttank nicht entlüftet werden. Ein vollständiges Betanken würde behindert. Damit wird deutlich, welche Bedeutung dem erfindungsgemäßen Entlüftungsventil 8 in der Tankanlage zukommt.

Mit Hilfe des erfindungsgemäßen Entlüftungsventil 8 können die beiden Tankgefäße im wesentlichen vollgetankt werden.

Aus dem Haupttank 3 verdunstender Treibstoff kann sich im Be- und Entlüftungskanal 71 als Kondensat sammeln. Um dies zu verhindern, wird der flüssige Treibstoff vom Be- und Entlüftungskanal 71 in einen Verbindungskanal 9 geführt und von dort weiter in den Beund Entlüftungskanal 81. Damit wird der Be- und Entlüftungskanal 71 sicher freigehalten, so daß Luft aus der Atmosphäre über den Be- und Entlüftungskanal 71 und das Entlüftungsventil 7 in den Tank 3 nachgeführt werden kann.

Es wird damit verhindert, daß sich auch kondensierter Treibstoff im Be- und Entlüftungskanal 71 sammelt. Die konstruktive Besonderheit zeigt **Figur 4**. Der Verbindungskanal 9 verbindet den Be- und Entlüftungskanal 71 direkt mit dem Be- und Entlüftungskanal 81. Der Verbindungskanal 9 hat keine Lagedifferenz gegenüber den Beund Entlüftungskanälen 71, 81, sondern befindet sich in einer Flucht mit diesen. Somit sind bei voller Betankung stets die Funktion des Be- und Entlüftungskanals 71 zur Be- und Entlüftung des Haupttanks 3 gewährleistet.

Bei Horizontalflug liegt der Entnahmetank 4 höher als der Haupttank 3. Bei im wesentlichen noch voller Betankung fließt Treibstoff über den Überlauf 41 in den Haupttank 3. Treibstoffreste im Be- und Entlüftungskanal 81 fließen über Verbindungskanal 9 in Be- und Entlüftungskanal 71. Da das Entlüftungsventil 7 keine Ventilkugel 10 besitzt, kann in Abhängigkeit des Treibstoffpegels 711 entweder Treibstoff im Be- und Entlüftungskanal 71 sich sammeln und Be- und Entlüftungskanal 81 übernimmt die Be- und Entlüftung der Tankanlage oder bei gesunkenem Treibstoffpegel 711 infolge Verbrauchs laufen die Treibstoffreste aus Be- und Entlüftungskanal 81 über Ventil 7 in den Haupttank 3.

Wenn der Treibstoffpegel bei Flugbetrieb absinkt, kann infolge wechselnder horizontaler Fluglage im Be- und Entlüftungskanal 81 verbliebener Treibstoff über Be- und Entlüftungskanal 71 und geöffnetes Ventil 7 in den Haupttank 3 zurückgeführt werden oder, falls der Treibstoffpegel im Entnahmetank 4 niedrig genug liegt (unter Niveau des Ventil 8), auch in den Entnahmetank 4 zurückfließen.

Mit diesem Zwischenstück 9 wird auf konstruktiv einfache und kostengünstige Art und Weise erreicht, die Be- und Entlüftung zu verbessern und die Tankgefäße vollständig füllen zu können!

## Patentansprüche

1. Entlüftungssystem mit Entlüftungsventil (8) und mit Be- und Entlüftungskanal (81) für ein Tankgefäß (4) eines Hubschraubers, mit einer Einrichtung (15) zur Abdichtung des Be- und Entlüftungskanals (81) gegenüber dem Tankgefäß (4) beim Lösen eines Verbindungsmittels zwischen einer Rumpfzelle und dem Tankgefäß (4), wobei die Einrichtung (15) in einem Ventilgehäuse (14) des Entlüftungsventils (B) angeordnet ist und ein bewegbares Dichtmittel besitzt, wobei das Dichtmittel der Einrichtung (15) eine Ventilkugel (10) ist, **dadurch gekennzeichnet, dass** die Ventilkugel (10) den Be- und Entlüftungskanal (81) auch in Abhängigkeit eines Treibstoffpegels (711) im Tankgefäß (4) abdichtet und der Be- und Entlüftungskanal (81) mittels eines Verbindungskanals (9) mit einem Be- und Entlüftungskanal (71) eines anderen Tankgefäßes (3) verbunden ist.

2. Entlüftungssystem nach Anspruch 1, **dadurch gekennzeichnet, daß** die Ventilkugel (10) des Entlüftungsventils (8) in einem Zylinderraum (19) einen Hubweg von der Einrichtung (15) bis an die Öffnung (21) des Be- und Entlüftungskanals (16, 81) hat.

3. Hubschrauber, umfassend ein Tankgefäß (4) mit einem Entlüftungssystem nach Anspruch 1 oder 2.

## Claims

1. Ventilating system having a ventilating valve (8) and an aerating and ventilating channel (81) for a tank vessel (4) in a helicopter, the said system having an apparatus (15) for sealing off the aerating and ventilating channel (81) from the tank vessel (4) in the event of the detachment of a connecting means between a fuselage compartment and the said tank vessel (4), wherein the apparatus (15) is disposed in a valve housing (14) of the ventilating valve (8) and possesses a movable sealing means, and wherein the sealing means for the apparatus (15) is a valve ball (10), **characterised in that** the valve ball (10) also seals off the aerating and ventilating channel (81) in dependence upon a propellant level (711) in the tank vessel (4) and the aerating and ventilating channel (81) is connected, by means of a connecting channel (9), to an aerating and ventilating channel (71) of another tank vessel (3).

2. Ventilating system according to claim 1, **characterised in that** the valve ball (10) of the ventilating valve (8) has, within a cylinder chamber (19), a travel from the apparatus (15) as far as the opening (21) of the aerating and ventilating channel (16, 81).

3. A helicopter including a tank vessel (4) with a ventilating system according to claim 1 or claim 2.

## Revendications

1. Système de purge d'air comprenant une soupape de purge d'air (8) et un canal d'aération (81) pour un réservoir de carburant (4) d'un hélicoptère, comportant un dispositif (15) d'étanchéité du canal d'aération (81) par rapport au réservoir de carburant (4) lorsqu'on enlève d'un moyen de liaison entre une cellule de fuselage et le réservoir de carburant (4), le dispositif (15) étant disposé dans un carter de soupape (14) de la soupape de purge (8) et possédant un moyen d'étanchéité mobile, le moyen d'étanchéité du dispositif (15) étant une bille de soupape (10),
**caractérisé en ce que**
la bille de soupape (10) étanche le canal d'aération (81) également en fonction d'un niveau de carburant (711) dans le réservoir de carburant (4), et le canal d'aération (81) est relié à un canal d'aération (71) d'un autre réservoir de carburant (3) par l'intermédiaire d'un conduit de liaison (9).

2. Système de purge d'air selon la revendication 1,
**caractérisé en ce que**
la bille de soupape (10) de la soupape de purge (8) dispose dans un volume de cylindre (19) d'une course depuis le dispositif (15) jusqu'à l'ouverture (21) du canal d'aération (16, 81).

3. Hélicoptère, équipé d'un réservoir de carburant (4) muni d'un système de purge d'air selon la revendication 1 ou 2.
